# FASCICULE DE BREVET EUROPEEN

(11) **EP 2 129 215 B1**
(45) Date de publication et mention de la délivrance du brevet: **11.06.2014**
(21) Numéro de dépôt: 08735468.4
(22) Date de dépôt: 25.03.2008
(51) Int. Cl.: A01K 45/00

(54) **DISPOSITIF POURVU DE MOYENS PILOTABLES D'INJECTION D'UNE SUBSTANCE FLUIDE DANS UN OEUF ET INSTALLATION QUI EN EST ÉQUIPÉE**
GERÄT MIT ANTRIEBSMITTEL ZUR INJEKTION EINER FLÜSSIGEN SUBSTANZ IN EIN EI UND DAMIT AUSGESTATTETE VORRICHTUNG
DEVICE WITH DRIVABLE MEANS FOR INJECTING A FLUID SUBSTANCE INTO AN EGG AND EQUIPMENT INCLUDING SAME

(30) Priorité: 28.03.2007 FR 0702286
(43) Date de publication de la demande: 09.12.2009
(73) Titulaire: Poulard, Raphaël, 29600 Plourin les Morlaix (FR); Breuil, Jean-Pierre, 17770 Authon (FR); Croguennec, Robert, 29290 Milizac (FR)
(72) Inventeur: Poulard, Raphaël, 29600 Plourin les Morlaix (FR); Breuil, Jean-Pierre, 17770 Authon (FR); Croguennec, Robert, 29290 Milizac (FR)
(74) Mandataire: Regimbeau
(86) Numéro de dépôt international: PCT/EP2008/053492
(87) Numéro de publication internationale: WO 2008/125430

(56) Documents cités:
- FR-A1- 2 838 920
- US-A- 6 010 485
- US-A1- 2006 144 252
- US-A1- 2006 185 601
- US-A1- 2007 044 721
- US-A1- 2007 060 894

## Description

La présente invention se rapporte également à une installation comportant une pluralité de dispositifs d'injection d'au moins une substance fluide.

Par "substance fluide", on entend une substance qui a la capacité de couler sous le propre effet de sa gravité. Cela englobe donc des matières liquides, des matières visqueuses, mais aussi des particules en suspension dans un liquide.

Il est bien connu d'injecter dans des oeufs des substances de traitement, notamment des vaccins, afin de limiter le taux de mortalité et/ou d'augmenter la croissance des embryons qu'ils renferment, et/ou de prévenir certains risques de maladies infectieuses qui pourraient affecter l'embryon.

De tels dispositifs comportent essentiellement une série de têtes d'injection à aiguille, mobiles verticalement au-dessus d'un convoyeur d'acheminement de plateaux d'incubation, et/ou de tout type de support alvéolés, sur lesquels les oeufs sont placés.

En vue de l'injection, l'ensemble de l'instrument d'injection est déplacé d'une position relevée vers une position d'injection qui vise à mettre les injecteurs en appui contre les oeufs par un moyen de positionnement qui contient l'aiguille (ou la seringue) de l'injection. Les aiguilles des injecteurs sont alors déplacées depuis une position haute vers une position basse d'injection pour injecter la substance dans les oeufs. On connait une installation d'injection d'au moins une substance fluide dans des oeufs du document US-A-2006 144 252.

Dans le document EP 1505870 est décrit un dispositif d'injection, dans lequel la substance à injecter est portée à très haute pression (5 à 50 bars). La pression de la substance est alors utilisée pour percer la membrane interne de l'oeuf et permettre à ladite substance de pénétrer dans le liquide amniotique. Cette technique présente de graves inconvénients car la pression supportée par la substance détruit les molécules des organismes vivants contenus dans la substance.

Dans ce même document est décrit un dispositif d'injection dans lequel la substance, par exemple un vaccin, est amenée depuis l'extérieur jusque dans le corps de l'injecteur, au sein d'une chambre d'injection.

Cette chambre se remplit et se vide par pression au moyen d'un piston actionné par un vérin pneumatique à simple ou double effet.

On peut ainsi délivrer dans la seringue une quantité prédéterminée et précise et constante de substance, par exemple 0,2 ml.

Lorsqu'on fait usage d'un dispositif tel que celui qui vient d'être présenté plus haut, on peut considérer que le volume de la chambre d'injection est un invariant pendant le mode opératoire.

On ne peut changer le volume de cette chambre qu'en modifiant la course du piston, ce qui ne peut se faire que lorsque la machine est à l'arrêt, et nécessite soit de modifier la géométrie des pièces de la chambre par adjonction de cale, par usinage, ou par la mise en place d'un nouveau jeu d'injecteurs correspondant au volume recherché.

On peut imaginer le caractère complexe et couteux de telles opérations, tout en mettant en évidence le côté fastidieux et les difficultés pratiques qui en découlent. S'ajoute aux difficultés pratiques décrites précédemment la manipulation manuelle de l'ensemble des injecteurs pour amorcer l'admission de la substance à injecter.

Par ailleurs, il est important de rappeler que les oeufs collectés en élevage pour être placés sur des supports alvéolés, dans lesquels un oeuf occupe une alvéole, peuvent provenir des variétés différentes. On note une grande dispersion quant à la taille des oeufs quelle que soit la variété génétique.

Les lots d'oeufs sont systématiquement hétérogènes: De ce fait, les plateaux alvéolés contiennent des oeufs de différentes tailles (généralement, les oeufs comprennent quatre catégories : gros, moyen, petit et très petit), la proportion dans chaque plateau de chaque catégorie étant variable et complètement aléatoire.

On a donc des oeufs "mélangés" de différentes tailles. Or on peut avoir un volume différent de substance à injecter pour chaque taille d'oeuf présent sur le support alvéolé.

On constate que le dispositif décrit ci-dessus ne peut satisfaire une telle demande.

Des dispositifs d'injection conventionnels utilisent des pompes à diaphragme ou des pompes péristaltiques qui sont placées entre la source externe de substance à injecter et les injecteurs. Cela qui implique une liaison tubulaire entre chaque pompe et chaque injecteur.

Par ailleurs, il est fréquent qu'une installation de ce type présente plusieurs dizaines de dispositifs d'injection. Le nombre de tubulures placées dans son environnement est donc très important, ce qui peut provoquer notamment des problèmes d'accès, de nettoyage et de maintenance à certaines parties de l'installation. Et ce problème est encore accentué si l'on souhaite administrer par une même injection, plusieurs produits différents.

On constate également que le type de pompe mentionné ci-dessus satisfait le besoin de délivrer un volume spécifique de substance à injecter, mais n'autorise pas la distribution de différents volumes de substance. Ceci constitue une difficulté quand apparaît une nécessité de faire varier la quantité de substance à injecter

Toutefois, on se trouve malgré tout confronté à un problème qui résulte de la nature des produits de traitement à injecter que constituent les vaccins.

En effet, ces vaccins renferment des organismes vivants qui supportent relativement mal les contraintes mécaniques, la pression et la vitesse. Or, avec le système qui vient d'être décrit, il existe non seulement tout un réseau de tubulures entre le récipient de stockage et les moyens d'expulsion, mais également une tubulure entre chaque moyen d'expulsion et chaque dispositif d'injection. On comprend que le "parcours" du liquide du récipient à un dispositif d'injection est long et que ce liquide est soumis par conséquent à des contraintes particulièrement nombreuses qui peuvent affecter sa qualité.

Un autre inconvénient est lié au fait que les tubulures sont constituées d'un matériau souple qui se dégrade rapidement, de sorte qu'il est nécessaire de procéder fréquemment à leur remplacement.

Encore un autre inconvénient est lié au fait que les quantités de substance à délivrer sont difficiles à maîtriser de par l'utilisation de tubulures souples. On en injecte plus que nécessaire, afin que suffisamment de principe actif soit administré.

On peut également énoncer un autre inconvénient, à savoir la difficulté pour nettoyer et désinfecter l'ensemble des tubulures.

L'invention vise donc à remédier à ces inconvénients, en proposant un dispositif qui permet de réduire au maximum les contraintes auxquelles est soumise la substance, tout en libérant l'environnement immédiat et en satisfaisant les contraintes sanitaires.

L'invention vise également, à satisfaire les besoins de variabilité du volume de substance à injecter de manière automatique, par des moyens intégrés à l'injecteur et à l'aide du même injecteur quels que soient ces besoins de variabilité, pendant le mode opératoire.

L'invention vise également, à utiliser une basse pression pour délivrer la substance, via une aiguille, dans le liquide amniotique ou dans l'embryon afin de ne pas détruire les organismes vivants composant la substance.

Enfin, on constate une demande à disposer d'une longueur réglable de pénétration de l'aiguille dans l'oeuf en fonction des variétés génétiques et de l'age des lots d'oeufs.

Or, les dispositifs actuellement sur le marché ne permettent pas de remplir cette fonction.

La présente invention vise aussi à combler cette lacune.

L'invention se rapporte donc à une installation d'injection d'au moins une substance fluide dans des oeufs, telle qu'elle est caractérisé dans la revendication 1.

Selon l'invention, sont intégrés dans ledit corps des moyens pilotables d'expulsion vers ladite aiguille d'une (ou plusieurs) quantité(s) réglable(s), variable(s) et paramétrable(s) de substance provenant desdits moyens d'alimentation.

Par le terme "substance", on entend aussi bien un seul et unique produit, qu'un mélange de produits différents, par exemple contenus dans des moyens d'alimentation différents.

Par l'expression "ce corps abrite", on entend qu'il renferme ou qu'il intègre ces moyens pilotables. Les moyens pilotables sont embarqués dans l'injecteur.

Ainsi, en intégrant à l'intérieur même du corps du dispositif lesdits moyens d'expulsion, on supprime tout l'ensemble de tubulures qui, selon l'art antérieur, se situait entre les moyens d'expulsion externes et chaque dispositif. Et ce faisant, on réduit les contraintes sur la substance, tout en rendant plus accessible l'environnement immédiat de chaque dispositif. L'intégration de ces moyens d'expulsion dans ledit corps permet également, pendant le mode opératoire, de faire varier le volume de substance à injecter, par exemple en fonction des facteurs non limitatifs suivants : la taille des oeufs, l'age des lots, le type de substance, la variété génétique, etc..

Par ailleurs, selon d'autres caractéristiques avantageuses et non limitatives :
- lesdits moyens pilotables consistent en une micro-pompe électrique à volume variable ;
- lesdits moyens pilotables consistent en une micro-électrovanne ;
- ledit corps renferme une cavité de logement desdits moyens ;
- ledit corps est relié à des moyens externes d'alimentation en au moins deux substances, de manière à permettre l'injection successive ou simultanée de ces substances ;
- ledit corps est pourvu de moyens électroniques de pilotage desdits moyens d'expulsion ;
- ledit corps comporte un coulisseau qui encercle longitudinalement ladite aiguille et qui est mobile entre deux positions extrêmes, à savoir une première position - dite position de repos - dans laquelle il masque la totalité de la longueur de ladite aiguille et une seconde position - dite position escamotée - dans laquelle il vient en butée contre ledit corps, dégageant ainsi au moins une partie de ladite aiguille ;
- ledit corps comporte une butée réglable dont le positionnement permet de faire varier la longueur de pénétration de l'aiguille dans ledit oeuf;
- le corps comporte un capteur de contrôle du fonctionnement du coulisseau ;
- le coulisseau est muni d'une ventouse souple apte à épouser la forme de l'oeuf pour le bloquer en position d'injection ;
- le coulisseau est relié à des moyens d'alimentation en produit désinfectant.

L'invention concerne également une installation d'injection d'au moins une substance fluide dans des oeufs qui est remarquable par le fait qu'elle comporte une pluralité de dispositifs selon l'une des caractéristiques précédentes.

Dans un mode de réalisation particulier dans lequel les oeufs à traiter sont positionnés dans des plaques alvéolées disposées à la queue leu leu sur des moyens de convoyage, cette installation comprend au moins un groupe de dispositifs alignés transversalement par rapport à la direction d'avancement des moyens de convoyage, leur écartement mutuel étant identique à celui qui sépare, dans le sens transversal, deux alvéoles voisins desdites plaques.

D'autres caractéristiques et avantages de la description apparaîtront à la lecture de la description qui va suivre d'un mode de réalisation préférentiel. Cette description sera faite en référence aux dessins annexés dans lesquels :
- la figure 1 est une vue en coupe, selon un plan longitudinal médian, d'un premier mode de réalisation d'un dispositif conforme à la présente invention ;
- la figure 2 est une vue analogue à la figure 1, d'une variante de réalisation du dispositif;
- les figures 3 à 5 sont des vues analogues à la figure 1, qui montrent des positions différentes du dispositif selon l'invention, associé à des moyens de déplacement identiques et à des oeufs de calibres différents ;
- les figures 6 à 8, ainsi que les figures 9 à 11 sont des vues analogues aux figures 3 à 5, les moyens de déplacement qui y sont représentés étant différents.

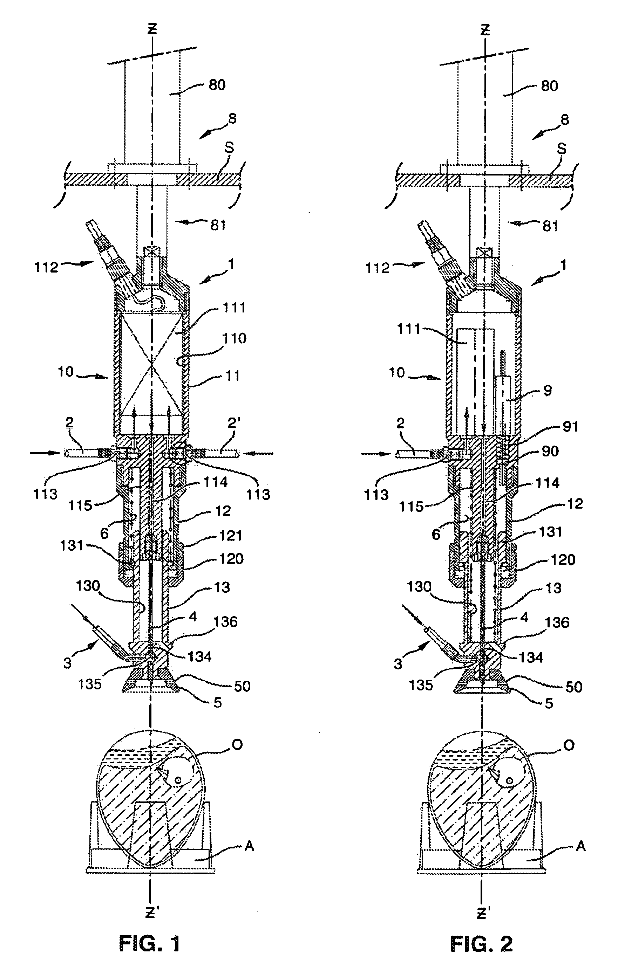

Le dispositif d'injection représenté à la figure 1 comporte essentiellement un corps d'injecteur 10 pourvu d'une aiguille saillante 4 de perçage et d'injection de substance fluide dans un oeuf, ce corps étant pourvu d'un coulisseau 13 qui entoure longitudinalement l'aiguille 4 et qui, dans le mode de réalisation représenté ici est logé partiellement à l'intérieur du corps 10.

Ce corps d'injecteur est lui-même monté à l'extrémité libre de la tige 81 d'un vérin 8 d'axe vertical ZZ', sur lequel on reviendra plus tard.

Le corps d'injecteur 10 est constitué ici de deux éléments, à savoir un manchon principal 11 généralement cylindrique et une jupe secondaire 12 qui s'étend dans le prolongement inférieur de ce manchon.

Ledit manchon 11 s'étend selon l'axe Z-Z'. Il est creux et le vaste évidement 110 qu'il renferme constitue une chambre qui sert de logement à des moyens 111 qui seront décrits plus loin.

Ce manchon 11 se prolonge vers le bas par une tête cylindrique 115 de petit diamètre, centrée sur l'axe Z-Z', qui forme saillie inférieure.

Le long de cette tête s'étend, également centré selon l'axe Z-Z', un canal 114 qui fait communiquer l'évidement interne 110 avec l'extrémité libre de la tête 115.

Dans le prolongement de ce canal s'étend une aiguille creuse ou trocart 4, dont l'extrémité libre 40 est biseautée.

Deux canalisations similaires 2 et 2' d'amenée de substances à injecter sont branchées sur le manchon principal 11 et communiquent avec la chambre 110.

Plus précisément, ces canalisations sont reliées, via des passages 113, auxdits moyens 111. Bien entendu, lorsque l'on souhaite injecter une seule substance, une canalisation unique 2 suffit.

Les moyens 111 sont des moyens pilotables d'expulsion au travers du canal 114 et de l'aiguille 4 d'une quantité réglable de substance.

Par le terme "pilotable(s)", on entend qu'il s'agit de moyens qui permettent de régler à la demande ladite quantité de substance à injecter, par exemple depuis l'extérieur du dispositif, sans avoir à démonter le corps du dispositif.

Un premier exemple de tels moyens pilotables est constitué d'une micro-pompe électrique à volume variable. Un autre exemple est constitué par une micro-électrovanne. Dans ce dernier cas, la canalisation 2 (les canalisations 2 et 2') d'amenée de substance est (sont) reliée(s) à un récipient sous pression.

Des exemples de micro-électrovannes qui conviennent parfaitement sont celles commercialisées par la société LEE COMPANY, sous l'appellation "électrovanne bi-stable".

Des exemples de micro-pompes qui conviennent parfaitement sont celles commercialisées par la société LEE COMPANY, sous l'appellation "pompe à volume variable".

En particulier selon la nature de la substance que l'on injecte et selon sa résistance à de fortes pressions, on préférera utiliser l'un ou l'autre des ces moyens.

Quoi qu'il en soit, ils permettent de balayer des plages de pressions importantes, allant par exemple de 0, 01 bar à plus de cinq bars.

A la figure 1, la référence 112 identifie la source d'alimentation en énergie des moyens pilotables 111 que l'on vient de décrire.

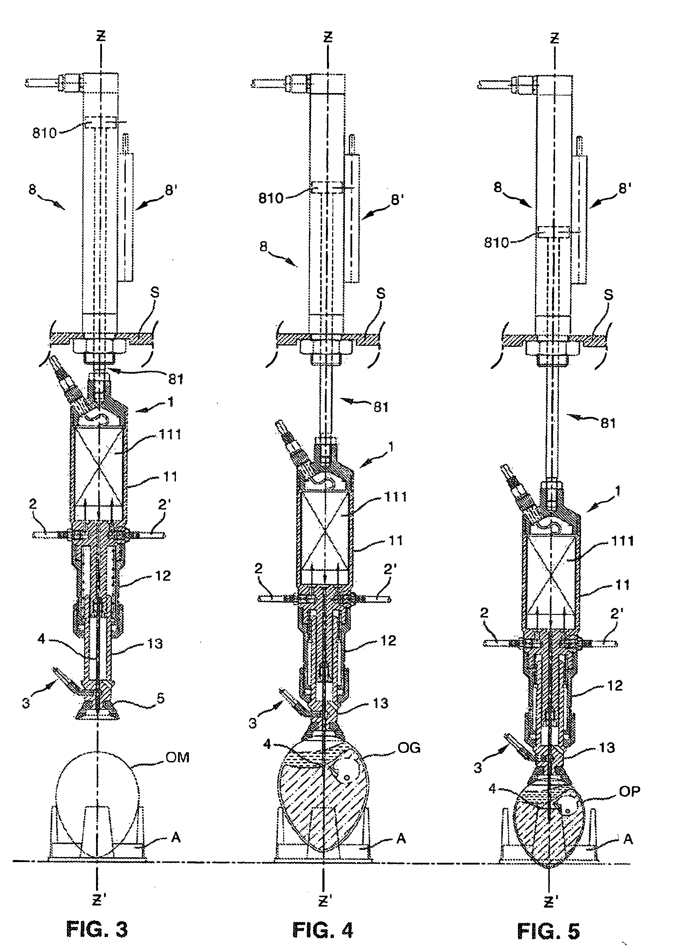

Les moyens 111 peuvent être associés à des moyens électroniques de pilotage, également portés par le corps 10, qui vont permettre de modifier à la demande le volume de liquide à délivrer. De tels moyens sont plus amplement décrits en référence aux figures 3 à 5.

Dans le prolongement de l'extrémité inférieure du manchon 11 est montée une jupe 12, qui s'étend parallèlement à l'axe Z-Z' jusqu'en deçà de la tête 115. Cette jupe ménage autour de cette tête un espace libre annulaire.

Sur cette jupe 12 est montée une butée réglable 120 équipée d'un système de blocage 121, dont on peut changer la position.

Comme mentionné plus haut, un coulisseau 13 encercle l'aiguille 4. Il est monté mobile en translation relativement au corps 30 et, plus particulièrement, à la jupe 12.

En l'occurrence, ce coulisseau est solidaire de l'intérieur de la jupe 12. A cet effet, sa paroi externe comporte un anneau périphérique saillant 131 qui vient se caler contre l'extrémité inférieure renflée de la jupe 12.

Le coulisseau est évidé intérieurement sur une partie de sa longueur, à savoir celle qui est dirigée vers son extrémité supérieure. Un ressort hélicoïdal 6 est placé en appui entre l'anneau 131 et le fond de l'espace annulaire entourant la tête 115.

Le ressort 6 tend à ramener le coulisseau 3 dans la position de la figure 1, c'est à dire celle dans laquelle il est extrait au maximum du corps 10.

Le long de la partie restante du coulisseau et centré sur l'axe ZZ', s'étend un canal 134 qui sert de logement à une partie de l'aiguille 4. Dans le corps du coulisseau débouche une canalisation 3 d'amenée d'un produit désinfectant qui communique avec la cavité 135 située à l'intérieur du canal 134, à proximité de l'extrémité libre de l'aiguille 4.

A l'extrémité inférieure libre du coulisseau 13 est montée une ventouse souple 5 destinée à épouser la forme de l'oeuf et le bloquer au moment de l'injection. Elle est constituée d'un produit très déformable et non agressif tel que du silicone. Cette ventouse spécifique est insérée à l'extrémité du coulisseau 13. Un canal 50 est visible à la figure 1, il sert à évacuer l'air qui resterait prisonnier entre la ventouse et l'oeuf, quand celle=ci s'y applique.

Le coulisseau 13 peut se mouvoir en translation entre deux positions extrêmes particulièrement visibles aux figures 1 et 4.

La première position extrême (figure 1) peut être qualifiée de "position de repos". Dans cette position, le coulisseau 13 masque la totalité de la longueur de l'aiguille 4 et son anneau périphérique 131 vient en appui contre l'extrémité inférieure de la jupe 12. On peut aussi parler de position basse.

Dans la seconde position extrême dite "position escamotée" (celle de la figure 4), un anneau saillant 136 du coulisseau 13 vient en appui sur la butée réglable 120, de sorte qu'il dégage ainsi une partie de l'aiguille 4.

On notera que c'est cette partie dégagée de l'aiguille qui conditionne sa pénétration plus ou moins profonde au sein de l'oeuf à traiter. Par ailleurs, c'est le positionnement de la butée 120 décrite plus haut qui va définir la course du coulisseau 13.

La butée 120 sera réglée par l'opérateur en fonction par exemple, de la "variété" d'oeufs à traiter, de l'affûtage de l'aiguille, de manière à ce que l'extrémité inférieure de l'aiguille par laquelle est distribuée la substance de traitement, soit libérée au sein du liquide amniotique ou de l'embryon.

Le dispositif représenté à la figure 2 présente de nombreux points communs avec le précédent.

Il s'en distingue cependant par les points suivants :
En premier lieu, il n'est relié qu'à une seule canalisation 2.

De plus, la partie supérieure du coulisseau comporte un rebord périphérique saillant 131 qui vient se caler sur l'anneau de la jupe 12.

Le ressort 6 est placé dans l'évidement longitudinal 130 que présente le coulisseau 13. Il entoure la tête 115 du manchon 11 et vient se caler contre celui-ci.

A l'intérieur de l'évidement 110 du manchon 11 est logé, en plus des moyens 111 décrits plus haut, un palpeur 9 dont la tige 90, constamment ramenée en position d'extension par un ressort 91, s'étend partiellement au voisinage de la tête 115 du manchon.

Ainsi, lorsque le coulisseau 13 est déplacé vers le haut, il repousse la tige 90. Ce déplacement est enregistré par le palpeur, lequel est associé à une électronique adéquate, comme un signe de bon fonctionnement du dispositif. A contrario, si aucun déplacement n'est enregistré par le palpeur, cela signifie que le coulisseau 13 est bloqué. Dans ce cas, l'électronique associée au palpeur peut commander l'arrêt du dispositif, voire de l'installation dans laquelle celui-ci est intégré.

Aux figures 3 à 5 est représenté sensiblement le même dispositif que celui de la figure 1.

En référence à la figure 3, le dispositif est suspendu à l'extrémité inférieure de la tige 81 d'un vérin 8 d'axe vertical Z-Z'. Il fait office de moyens de coulissement pour déplacer le dispositif 1 en direction de l'oeuf à traiter.

Ce vérin peut être à fonctionnement mécanique, électrique ou pneumatique.

Son corps 81 est solidaire d'un support S solidaire de l'installation d'injection.

Il s'agit par exemple d'un vérin à simple effet dont le ressort de rappel n'est pas représenté ici.

On a référencé 810 le piston de ce vérin qui, par exemple, est constitué d'un matériau magnétique.

Sur le corps 81 sont fixés des moyens de détection de la course de la tige 81 du vérin. En l'occurrence, c'est ici la course du piston 810 qui est détectée.

Les moyens de détection peuvent être constitués d'un capteur numérique ou analogique de déplacement. Il peut aussi s'agir d'un palpeur, d'un capteur incrémental ou d'un système à détection optique.

Par exemple, des capteurs de la série LVDT de la société MICRO-EPSILON conviennent tout à fait.

Ces moyens de détection sont reliés à des moyens d'enregistrement et de commande (autrement appelés moyens de pilotage plus haut dans la description), sous la forme d'une électronique (non représentés), par exemple portée par le manchon 11, qui est en mesure, en fonction de la course détectée, de piloter les moyens 111 de façon à délivrer une quantité différente de substance en fonction de la course détectée.

Comme cela apparaît clairement à la comparaison des figures 3 à 5 dans lesquelles le dispositif 1 est disposé à l'aplomb d'oeufs de tailles différentes, à savoir un oeuf de taille moyenne OM (figure 3), un gros oeuf OG (figure 4) et un petit oeuf OP (figure 5) en place dans une alvéole A, la course de la tige 81 du vérin est directement proportionnelle à la taille de l'oeuf.

On peut donc concevoir le dispositif de manière à allouer à différentes courses de la tige, des quantités différentes de substance à injecter. Ainsi, on gère au mieux les volumes à délivrer.

Bien entendu, cette quantité sera inversement proportionnelle à la taille des oeufs.

De préférence, le technicien responsable de l'installation l'aura configurée pour que certaines valeurs de courses de la tige du vérin soient associées aux quatre "calibres" habituels des oeufs (gros, moyens, petits et très petits) et qu'à chacune de ces courses soit associée une quantité spécifique de substance à délivrer.

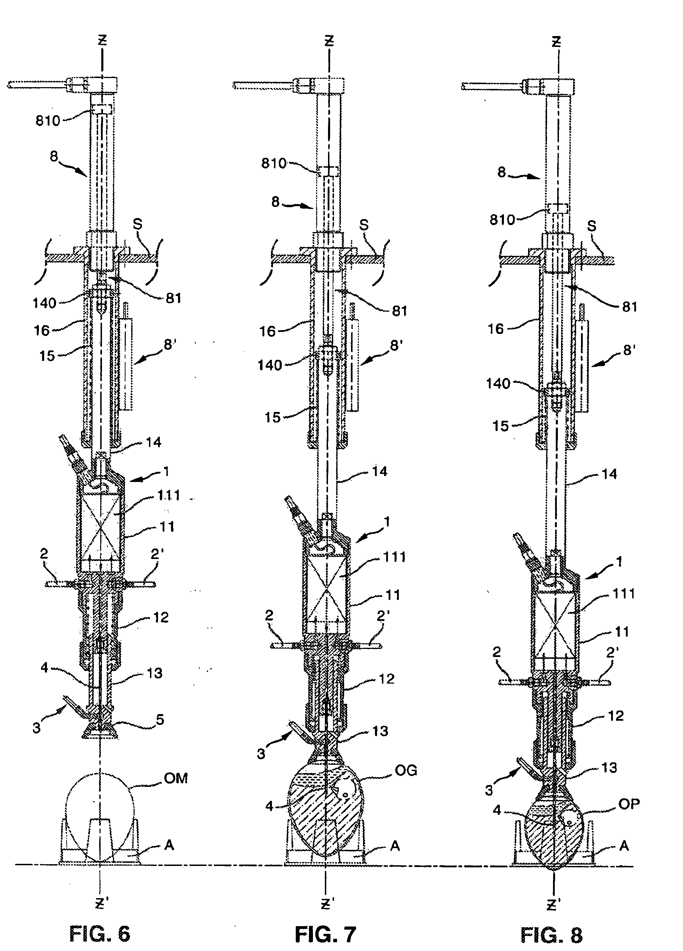

Le dispositif des figures 6 à 8 est similaire au précédent.

Ici, toutefois, le vérin 8 est un micro-vérin et sa tige 81 est reliée au dispositif par une coulisse 14. Par ailleurs, sur le support S est fixé, selon l'axe Z-Z', un second tube 16 de plus large diamètre, dans lequel la tige 81 et la coulisse 14 sont insérés. Un ressort hélicoïdal 15 est calé entre l'extrémité supérieure de la coulisse 14 et l'extrémité inférieure du tube 16.

Cette solution, dans laquelle une partie des efforts est reportée sur le ressort 16, permet d'utiliser un vérin de plus petite taille, qui permet une gestion plus précise de la pression exercée sur l'oeuf.

Sur le tube 16 sont fixés des moyens de détection 8' du déplacement de la coulisse 14. En l'occurrence, c'est ici la course d'une collerette 140 formant piston qui est détectée.

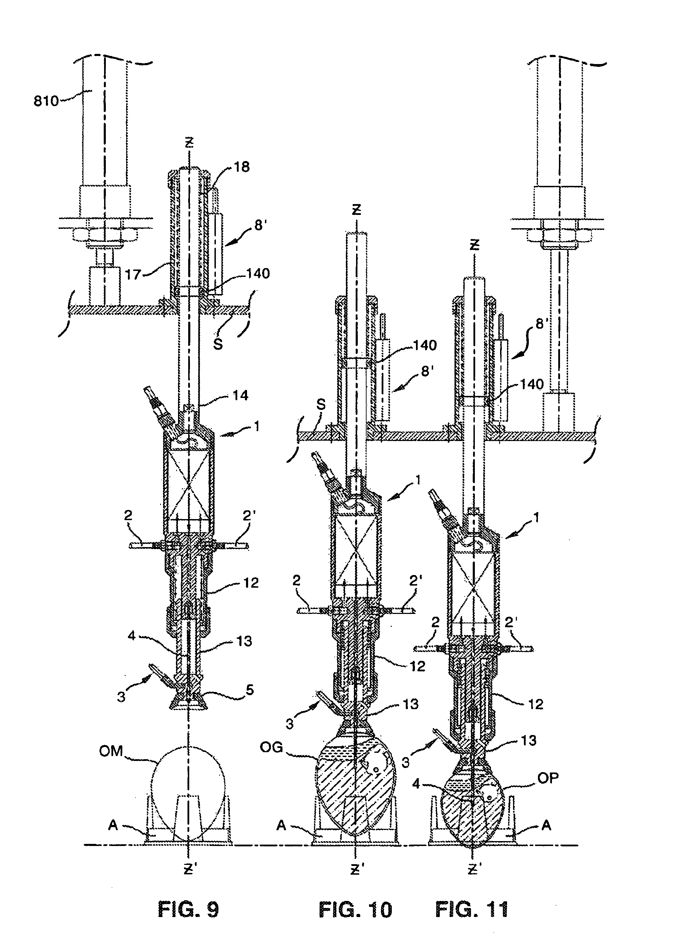

Enfin, en référence aux figures 9 à 11, le support S porte un tube 17 qui s'étend selon Z-Z' et vers le haut, à l'opposé du dispositif 1.

Il est traversé par une coulisse 14 à l'extrémité de laquelle est fixé le dispositif 1. Cette coulisse 14 porte elle aussi une collerette périphérique 140 formant un piston contre lequel est calé un ressort hélicoïdal 18.

Ici, le support S est mobile verticalement, en direction des oeufs à traiter.

Ainsi, il est abaissé sur une course telle que la ventouse souple 5 vienne en appui sur l'oeuf à traiter et que le coulisseau 13 remonte dans la jupe 12 jusqu'à la butée réglable 120 (voir figure 10).

Cette solution permet une meilleure rigidité et un meilleur guidage du dispositif d'injection.

Ce système est intéressant car il permet la descente verticale de bas en haut d'une pluralité de dispositifs d'injection à l'aide d'un même actionneur permettant une économie de matériel, une simplicité de montage, et de câblage.

## Revendications

1. Installation d'injection d'au moins une substance fluide dans des oeufs, qui comporte une pluralité de dispositifs d'injection (1) de ladite substance fluide dans un oeuf (O), du type comprenant un corps d'injecteur (10) qui est pourvu d'une aiguille saillante (4) de perçage et d'injection de ladite substance dans le liquide amniotique dudit oeuf (O) et/ou dans l'embryon enfermé dans ledit oeuf, ce corps étant relié à des moyens externes d'alimentation en cette substance, dans ledit corps (10) étant intégrés des moyens pilotables (111) d'expulsion vers la dite aiguille (4), d'une (ou plusieurs) quantité(s) réglable(s), variable(s), et paramétrable(s) de substance provenant desdits moyens d'alimentation, **caractérisé en ce que** lesdits moyens pilotables sont des moyens électroniques qui permettent de régler à la demande ladite quantité à injecter, depuis l'extérieur du dispositif, sans avoir à en démonter le corps.

2. Installation selon la revendication 1, **caractérisée par le fait que** lesdits moyens pilotables (111) consistent en une micro-pompe électrique à volume variable.

3. Installation selon la revendication 1, **caractérisée par le fait que** lesdits moyens pilotables (111) consistent en une micro-électrovanne.

4. Installation selon l'une des revendications précédentes, **caractérisé par le fait que** ledit corps (10) renferme une cavité (110) de logement desdits moyens (111).

5. Installation selon l'une des revendications précédentes, **caractérisée par le fait que** le corps (10) est relié à des moyens externes d'alimentation en au moins deux substances, de manière à permettre l'injection successive ou simultanée de ces substances.

6. Installation selon l'une des revendications précédentes, **caractérisée par le fait que** ledit corps comporte un coulisseau (13) qui encercle longitudinalement ladite aiguille (4) et qui est mobile entre deux positions extrêmes, à savoir une première position - dite position de repos - dans laquelle il masque la totalité de la longueur de ladite aiguille (4) et une seconde position - dite position escamotée - dans laquelle il vient en butée contre ledit corps (10), dégageant ainsi au moins une partie (40) de ladite aiguille (4).

7. Installation selon la revendication précédente, **caractérisée par le fait que** ledit corps (10) comporte une butée réglable (120) dont le positionnement permet de faire varier la longueur de pénétration de l'aiguille (4) dans ledit oeuf (O).

8. Installation selon l'une des revendications 6 ou 7, **caractérisée par le fait que** ledit corps (10) comporte un capteur (9) de contrôle du fonctionnement du coulisseau (13).

9. Installation selon l'une des revendications 6 à 8, **caractérisée par le fait que** ledit coulisseau (13) est muni d'une ventouse souple (5) apte à épouser la forme de l'oeuf (O) pour le bloquer en position d'injection.

10. Installation selon l'une des revendications 6 à 9, **caractérisée par le fait que** ledit coulisseau (13) est relié à des moyens d'alimentation en produit désinfectant.

11. Installation selon l'une des revendications précédentes, dans laquelle les oeufs (O) à traiter sont positionnés dans les supports alvéolés disposés à la queue leu leu sur des moyens de convoyage, **caractérisée par le fait qu'**elle comprend au moins un groupe de dispositifs (1) alignés transversalement par rapport à la direction d'avancement desdits moyens de convoyage, leur écartement mutuel étant identique à celui qui sépare, dans le sens transversal, deux alvéoles voisines desdits supports.

## Patentansprüche

1. Vorrichtung zum Injizieren mindestens einer fluiden Substanz in Eier, die mehrere zum Injizieren der fluiden Substanz in ein Ei (0) dienende Injektionsgeräte (1) des Typs mit einem Injektorkörper (10) aufweist, der mit einer vorspringenden Nadel (4) zum Einstechen und zum Injizieren der Substanz in die Amnionflüssigkeit des Eies (0) und/oder in den in dem Ei eingeschlossenen Embryo versehen ist, wobei dieser Körper mit externen Mitteln zum Zuführen dieser Substanz verbunden ist, wobei in dem Körper (10) Antriebsmittel (111) eingebaut sind, um eine oder mehrere steuerbare variable und parametrierbare Substanzmengen, die von den Zuführungsmitteln herkommen, zu der Nadel (4) auszustoßen, **dadurch gekennzeichnet, dass** die Antriebsmittel elektronische Mittel sind, die erlauben, von außerhalb des Geräts die zu injizierende Menge nach Wunsch zu steuern, ohne den Körper zerlegen zu müssen.

2. Vorrichtung nach Anspruch 1, **dadurch gekennzeichnet, dass** die Antriebsmittel (111) aus einer elektrischen Mikropumpe mit variablem Volumen bestehen.

3. Vorrichtung nach Anspruch 1, **dadurch gekennzeichnet, dass** die Antriebsmittel (111) aus einem Mikro-Elektroventil bestehen.

4. Vorrichtung nach einem der vorstehenden Ansprüche, **dadurch gekennzeichnet, dass** der Körper (10) einen Hohlraum (110) zur Aufnahme der Mittel (111) umschließt.

5. Vorrichtung nach einem der vorstehenden Ansprüche, **dadurch gekennzeichnet, dass** der Körper (10) mit externen Zuführungsmitteln zum Zuführen mindestens zweier Substanzen verbunden ist, um die aufeinanderfolgende oder gleichzeitige Injektion dieser Substanzen zu erlauben.

6. Vorrichtung nach einem der vorstehenden Ansprüche, **dadurch gekennzeichnet, dass** der Körper einen Stößel (13) aufweist, der die Nadel (4) längs umgibt und der zwischen zwei Endpositionen bewegbar ist, nämlich einer ersten Position, genannt Ruheposition, in welcher er die gesamte Länge der Nadel (4) bedeckt, und einer zweiten Position, genannt eingezogene Position, in welcher er an dem Körper (10) in Anschlag kommt und dabei mindestens einen Teil (40) der Nadel (4) freigibt.

7. Vorrichtung nach dem vorstehenden Anspruch, **dadurch gekennzeichnet, dass** der Körper (10) einen steuerbaren Anschlag (120) aufweist, dessen Positionierung erlaubt, die Eindringlänge der Nadel (4) in das Ei (0) zu variieren.

8. Vorrichtung nach einem der Ansprüche 6 oder 7, **dadurch gekennzeichnet, dass** der Körper (10) einen Sensor (9) zur Kontrolle der Funktion des Stößels (13) aufweist.

9. Vorrichtung nach einem der Ansprüche 6 bis 8, **dadurch gekennzeichnet, dass** der Stößel (13) mit einem weichen Saugnapf (5) ausgestattet ist, der sich an die Form des Eies (0) anpassen kann, um es in der Injektionsposition zu fixieren.

10. Vorrichtung nach einem der Ansprüche 6 bis 9, **dadurch gekennzeichnet, dass** der Stößel (13) mit Mitteln zum Zuführen eines desinfizierenden Produkts verbunden ist.

11. Vorrichtung nach einem der vorstehenden Ansprüche, in welcher die zu behandelnden Eier (0) in zellenförmigen Trägern angeordnet sind, die in Reihe an Fördereinrichtungen angeordnet sind, **dadurch gekennzeichnet, dass** sie mindestens eine Gruppe von Geräten (1) aufweist, die transversal bezüglich der Vorrückrichtung der Fördereinrichtungen ausgerichtet sind, wobei ihr gegenseitiger Abstand gleich demjenigen ist, der in transversaler Richtung zwei benachbarte Zellen der Träger trennt.

## Claims

1. Installation to inject at least one fluid substance into eggs (O), which comprises a plurality of devices (1) for injecting said fluid substance into said eggs of the type comprising an injector body (10) which is provided with a projecting needle (4) to pierce and inject said substance into the amniotic liquid of said egg (O) and/or into the embryo contained in said egg, this body being linked to external supply means of this substance, drivable means (111) being integrated in said body (10) to expel towards said needle (4) one or more adjustable, variable and parameterizable quantities of substance derived from said supply means, **characterized in that** said drivable means are electronic means which permit to adjust at will said quantity to be injected, from the outside of the device without dismounting the body of said device.

2. Installation according to claim 1, **characterized by** the fact that said drivable means (111) consist of a variable volume, electric micropump.

3. Installation according to claim 1, **characterized by** the fact that said drivable means (111) consist of a miniature solenoid valve.

4. Installation according to any of the preceding claims, **characterized by** the fact that said body (10) contains a cavity (110) to house said means (111).

5. Installation according to any of the preceding claims, **characterized by** the fact that the body (10) is connected to external means supplying at least two substances, so as to allow the successive or simultaneous injection of these substances.

6. Installation according to any of the preceding claims, **characterized by** the fact that said body comprises a slide (13) which longitudinally surrounds said needle (4) and is mobile between two end positions, namely a first position - called rest position - in which it masks the entire length of said needle (4), and a second position - called retracted position - in which it comes to abut said body (10) thereby freeing at least part (40) of said needle (4).

7. Installation according to the preceding claim, **characterized by** the fact that said body (10) comprises an adjustable abutment (120) whose positioning is used to cause a variation in the penetration length of the needle (4) into said egg (O).

8. Installation according to either of claims 6 or 7, **characterized by** the fact that said body (10) comprises a sensor (9) controlling the functioning of the slide (13).

9. Installation according to any of claims 6 to 8, **characterized by** the fact that said slide (13) is provided with a flexible suction cup (5) able to follow the contour of the egg (O) to block it in injection position.

10. Installation according to any of claims 6 to 9, **characterized by** the fact that said slide (13) is linked to means supplying a disinfectant product.

11. Installation according to any of the preceding claims, wherein the eggs (O) to be treated are positioned in dimpled supports arranged one after the other on conveying means, **characterized by** the fact that it comprises at least one group of devices (1) aligned crosswise relative to the direction of travel of said conveying means, their mutual spacing being identical to the distance separating two neighbouring dimples of said supports in the transverse direction.
